(19) Europäisches Patentamt
European Patent Office
Office européen des brevets

(11) Veröffentlichungsnummer: **0 031 899**
**B1**

(12) # EUROPÄISCHE PATENTSCHRIFT

(45) Veröffentlichungstag der Patentschrift: **06.06.84**

(51) Int. Cl.[3]: **C 08 G 69/48,** C 08 G 73/02, D 21 H 3/58

(21) Anmeldenummer: **80107495.6**

(22) Anmeldetag: **01.12.80**

(54) **Selbstvernetzende wasserlösliche Reaktionsprodukte, Verfahren zur Herstellung von Bindemitteln aus solchen Produkten und Verwendung der Produkte zur Erhöhung der Nassfestigkeit von Papier.**

(30) Priorität: **12.12.79 DE 2949870**

(43) Veröffentlichungstag der Anmeldung: **15.07.81 Patentblatt 81/28**

(45) Bekanntmachung des Hinweises auf die Patenterteilung: **06.06.84 Patentblatt 84/23**

(84) Benannte Vertragsstaaten: **BE DE FR GB SE**

(56) Entgegenhaltungen:
**EP-A-0 002 474**
**DE-A-1 771 043**
**DE-A-2 158 199**
**DE-B-1 177 824**
**DE-B-1 771 043**
**DE-B-1 906 450**
**US-A-4 075 177**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Becker, Wilhelm, Dr., Öjendorfer Höhe 37c, D-2000 Hamburg 74 (DE)**
Erfinder: **Marten, Manfred, Schneeheide 36, D-2104 Hamburg 92 (DE)**
Erfinder: **Pommer, Winfried, Dr., Waldenserstrasse 5f, D-6380 Bad Homburg (DE)**

EP 0 031 899 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Es ist bekannt (DAS 1 177 824), Polyamine mit mindestens drei Aminogruppen mit $C_{3-10}$-Dicarbonsäuren umzusetzen und die so erhaltenen Polyamide mit Epichlorhydrin in wasserlösliche Kondensate überzuführen. Dabei kann das Epichlorhydrin in einem Molverhältnis zu den sekundären Aminogruppen des Polyamides von etwa (0,5 bis 18) :1 verwendet werden. Die gewonnenen Kondensate können zur Herstellung von naßfestem Papier dienen.

Nach einer Ausführungsform dieses Verfahrens werden die Kondensate zusätzlich noch einer Quarternisierung unterworfen, um die Lagerbeständigkeit zu verbessern, wobei nach einigen Beispielen das giftige Dimethylsulfat verwendet wird. Diese Arbeitsweise erfordert einen zusätzlichen Arbeitsgang, ganz abgesehen von der Umweltbelastung und den Vorsichtsmaßnahmen wegen der Verwendung toxischer Substanzen.

Aus einer anderen Druckschrift (DAS 1 546 369) ist die Herstellung von Papier, Pappe usw. mit verbesserter Naßfestigkeit beschrieben, wobei den wäßrigen Dispersionen von Cellulosefasern ein Polyamid-Epichlorhydrin-Kondensat zugesetzt und das Harz auf den Fasern ausgehärtet wird. Dieses Harz wird durch Polykondensation von $C_{3-10}$-Dicarbonsäuren mit Polyaminen im Molverhältnis Polyamine : Dicarbonsäure = (0,8 bis 1,4) : 1 in erster Stufe und durch weitere Umsetzung der erhaltenen Polyamide mit Epichlorhydrin in zweiter Stufe hergestellt.

Die Stabilität und Naßreißfestigkeit der bekannten Produkte reichte jedoch für manche Verwendungszwecke nicht aus.

Außerdem sind selbstvernetzende wasserlösliche Produkte bekannt (DOS 1 771 043), die durch Umsetzung von Epichlorhydrinen oder $\alpha$-Dihalogenhydrinen mit Mischungen aus speziellen Polyamiden und speziellen wasserlöslichen Polyaminen im Gewichtsverhältnis Polyamide : Polyamine = 1 : 1 bis 10 : 1 hergestellt worden sind und wobei bevorzugt 0,5 bis 1,5 Mol Epihalogenhydrin oder $\alpha$-Dihalogenhydrin pro basischem N-Atom in den Polyamin- und Polyamidmischungen verwendet werden. Diese bekannten Produkte dienen als Naßfestmittel für Papier. Die als Ausgangsstoffe dienenden Polyamide werden erhalten durch Umsetzung von bestimmten $C_{4-10}$-Dicarbonsäuren bzw. deren funktionellen Derivaten, gegebenenfalls im Gemisch mit $\omega$-Aminocarbonsäuren oder deren Lactamen, mit solchen Polyaminen, die mindestens zwei primäre und mindestens eine sekundäre oder tertiäre Aminogruppe enthalten, oder mit Mischungen dieser Polyamine mit solchen Polyaminen, die zwei primäre oder sekundäre Aminogruppen oder eine primäre und eine sekundäre Aminogruppe enthalten.

Die als Ausgangsstoffe dienenden wasserlöslichen Polyamine enthalten mindestens zwei N-Atome, die durch mindestens drei C-Atome voneinander getrennt sind, und weisen mindestens zwei an verschiedene N-Atome gebundene H-Atome auf.

Nach einem weiteren bekannten Verfahren (DAS 1 906 450) werden ebenfalls selbstvernetzende wasserlösliche Kondensationsprodukte vorgeschlagen, die für denselben Verwendungszweck dienen. Dabei wird Epichlorhydrin oder $\alpha$-Dihalogenhydrin entweder zunächst mit speziellen basischen Polyamiden und darauf mit speziellen wasserlöslichen Polyaminen oder zunächst mit den speziellen wasserlöslichen Polyaminen und dann mit den speziellen basischen Polyamiden umgesetzt.

Die als Ausgangsstoffe dienenden Polyamide und Polyamine sind dieselben wie die nach der vorgehenden Veröffentlichung.

Für verschiedene Verwendungszwecke der bekannten Produkte war es erwünscht, die Naßreißfestigkeit von damit behandeltem Papier noch zu steigern.

Die vorliegende Erfindung betrifft nunmehr selbstvernetzende wasserlösliche Reaktionsprodukte aus Epihalogenhydrin, vorzugsweise Epichlorhydrin, wasserlöslichen basischen Polyamidoaminen und wasserlöslichen Polyaminen, die mindestens zwei an verschiedene Stickstoffatome gebundene Wasserstoffatome enthalten und die dadurch gekennzeichnet sind, daß das Verhältnis der Mol-Menge Epihalogenhydrin zur Summe der Äquivalente an freien basischen Aminogruppen mehr als 1,5 : 1, aber weniger als 2 : 1 beträgt.

Unter »freien basischen Aminogruppen« sind primäre, sekundäre und tertiäre Aminogruppen zu verstehen.

Zum Begriff Äquivalente vgl. Pure Appl. Chem. 50 (1978), 327—338, bes. S. 337.

Es hat sich nämlich überraschenderweise gezeigt, daß nur innerhalb des angegebenen Bereichs von mehr als 1,5 : 1 und weniger als 2 : 1 eine wesentliche Verbesserung der Lagerstabilität der Produkte und der Naßfestigkeit des damit ausgerüsteten Papiers erzielt wird.

Als wassserlösliche, basische Polyamidoamine, die den erfindungsgemäßen selbstvernetzenden, wasserlöslichen Reaktionsprodukten zugrunde liegen, kommen insbesondere in Betracht:

a) Umsetzungsprodukte von gesättigten aliphatischen $C_4$—$C_{10}$-Dicarbonsäuren, wie Bernsteinsäure, Glutarsäure, Adipinsäure, Diglykolsäure oder Sebazinsäure oder deren funktionellen Derivaten, wie Anhydriden und Estern, wobei die drei erstgenannten Säuren bevorzugt sind, mit aliphatischen Polyaminen, die mindestens zwei primäre Aminogruppen und mindestens eine sekundäre und/oder tertiäre Aminogruppe enthalten,

b) Umsetzungsprodukte von $\alpha$, $\beta$-ungesättigten Carbonsäureestern, deren Alkoholrest 1 bis 8, vorzugsweise 1 bis 3 C-Atome hat, wie Acrylsäureäthylester und Methacrylsäuremethylester, mit

aliphatischen, cycloaliphatischen, araliphatischen und/oder heterocyclischen Polyaminen, die mindestens zwei Aminogruppen und zwar primäre und/oder sekundäre, enthalten.

c) Umsetzungsprodukte mit mindestens drei Kohlenstoffatome enthaltenden $\omega$-Amino-carbonsäuren oder deren Lactamen, zum Beispiel 6-Aminocapronsäure und 8-Aminocaprylsäure bzw. 6-Caprolactam und 8-Capryllactam, mit aliphatischen Polyaminen, die mindestens zwei primäre Aminogruppen und mindestens eine sekundäre oder tertiäre Aminogruppe enthalten,

d) Umsetzungsprodukte von olefinisch ungesättigten Dicarbonsäuren, wie Maleinsäure oder Fumarsäure bzw. deren funktionellen Derivaten, wie Anhydriden oder Estern, mit Polyaminen des unter c) angeführten Typs sowie insbesondere

e) solche Umsetzungsprodukte, denen außer den unter a) genannten gesättigten aliphatischen $C_4-C_{10}$-Dicarbonsäuren und den unter d) genannten ungesättigten Dicarbonsäuren noch $\omega$-Aminocarbonsäuren oder deren Lactame des unter c) angeführten Typs und außer den unter c) angeführten Polyaminen noch zwei primäre oder zwei sekundäre Aminogruppen oder eine primäre und eine sekundäre Aminogruppe enthaltende aliphatische, cycloaliphatische, araliphatische und/oder heterocyclische Polyamine zugrunde liegen. Hierbei sind diejenigen basischen Polyamide zu bevorzugen, denen außer den Polyaminen des unter c) angeführten Typs und außer den gesättigten $C_4-C_{10}$-Dicarbonsäuren noch $\omega$-Aminocarbonsäuren oder deren Lactame des unter c) angeführten Typs zugrunde liegen.

Umsetzungsprodukte vom Typ a) aus Diäthylentriamin, Triäthylentetramin und Tetraäthylenpentamin sind besonders bevorzugt.

Die zur Erzielung wasserlöslicher Polyamidoamine einzuhaltenden Mengenverhältnisse der in Betracht kommenden Komponenten lassen sich durch Vorversuche leicht ermitteln. Bei den Polyamidoaminen, denen Polyamide vom Typ c) oder Mischungen derartiger Polyamine mit Polyaminen vom Typ e) einerseits und Dicarbonsäuren vom Typ d) oder gesättigte $C_4-C_{10}$-Dicarbonsäuren vom Typ a) oder Mischungen derartiger Dicarbonsäuren mit $\omega$-Aminocarbonsäuren oder deren Lactamen vom Typ c) andererseits zugrunde liegen, betragen die Molverhältnisse zwischen den Polyaminen und den Dicarbonsäuren zweckmäßig (0,8 bis 1,4) : 1, vorzugsweise (1 bis 1,1) : 1.

Die Herstellung der Polyamidoamine kann in üblicher Weise erfolgt sein, z. B. durch mehrstündiges Erhitzen der entsprechenden Komponenten unter Ausschluß von Sauerstoff auf Temperaturen von 125- bis 250° C zunächst unter gewöhnlichem Druck und dann unter vermindertem Druck, wobei zur Vermeidung der Dunkelfärbung der Polyamide geringe Mengen an Hydrazinhydrat oder Hydraziden zugesetzt werden können.

Als Polyamine kommen in Frage:

Äthylendiamin, N-(2-Hydroxyäthyl)-äthylendiamin N,N'-Dimethyl-äthylendiamin, 1,2-Diaminopropan, 1-Amino-3-methyl-amino-propan, 1,6-Diaminohexan, 1,4-Diaminocyclohexan, 1,3-Bis-aminomethylbenzol, Piperazin, Methyl-bis-(3-aminopropyl)-amin, Äthyl-bis-(3-aminopropyl)-amin, 2-Hydroxyäthyl-bis-(3-aminopropyl)-amin, N-(3-Aminopropyl)-tetramethylendiamin, N,N'-bis-(3-aminopropyl)-tetramethylendiamin, Polyalkylenpolyamine

der Formel (I) (siehe Ansprüche), in der

| | |
|---|---|
| $R^1$ und $R^2$ | unabhängig voneinander Wasserstoff oder einen gegebenenfalls durch eine Amino- oder Hydroxygruppe substituierten $C_1-C_{10}$-, vorzugsweise $C_1-C_4$-Alkylrest, |
| m | eine ganze Zahl von 1 bis 8, vorzugsweise 2 bis 4, und |
| n | eine ganze Zahl von 2 bis 10, vorzugsweise 3 bis 6, |

bedeuten, wie Di-propylen-(1,2)-triamin, Bis-(3-aminopropyl)-amin, Tri-propylen-(1,2)-tetramin und vor allem Diäthylentriamin, Triäthylentetramin und Tetraäthylenpentamin. Diese Amine können für die Umsetzungsprodukte vom Typ a) bis e) verwendet werden, soweit sie unter die dort genannten Definitionen fallen. Dabei sind vor allem die Polyalkylenpolyamine der Formel (I) für den Typ a) von Interesse.

Als wasserlösliche Polyamine, die den erfindungsgemäßen Reaktionsprodukten zugrunde liegen, können die für die Herstellung der Polyamidoamine genannten Polyamine eingesetzt werden. Als weitere Polyamine seien beispielsweise genannt: aliphatische Polyamine, wie

1,3-Bis-(2-aminoäthylamino)-propan, 3-(3-Diäthylamino-propylamino)-propylamin, Bis-(2-amino-äthyl)-äther, 2,2'-Bis-methylaminodiäthyläther, 2,2'-Bis-(2-amino-äthylamino)-diäthyläther, Bis-(3-amino-propyl)-äther, Bis-(3-amino-propyl)-sulfid, 1,6-Bis-(2-amino-äthylamino)-hexan, 1,6-Bis-(3-aminopropylamino)-hexan, Bis-(6-amino-n-hexyl)-amin und 1,3-Diamino-butan,

und insbesondere Polyalkylenpolyamine der Formel (I) (siehe Ansprüche), deren Alkylenrest bis zu 8

C-Atome enthält und deren Index maximal 5 ist, z. B.

1,3-Diamino-propan, 1-Amino-3-methylamino-propan, 1,3-Bis-(2-hydroxy-äthylamino)-propan, 1,4-Diamino-butan, 1,4-Bis-methylamino-butan, N-(3-amino-propyl)-tetramethylendiamin, N,N'-Bis-(3-amino-propyl)-tetramethylendiamin und vor allem Bis-(3-amino-propyl)-amin und Hexamethylendiamin,

ferner Polyamine der Formel (II) (siehe Ansprüche, in der

$R^3$ einen gegebenenfalls durch eine Amino- oder Hydroxygruppe substituierten $C_1-C_{18}$-Alkylrest,

$R^4$ und $R^5$ unabhängig voneinander Wasserstoff oder eine Methylgruppe,

p und q jeweils 0 oder eine ganze Zahl von 0 bis 20, vorzugsweise 1 bis 4 und

die Summe von (p und q) eine ganze Zahl von 1 bis 20, vorzugsweise 2 bis 5, bedeuten, z. B.

Äthyl-bis-(3-amino-propyl)-amin, 2-Hydroxyäthyl-bis-(3-amino-propyl)-amin, n-Butyl-bis-(3-aminopropyl)-amin, Tris-(3-amino-propyl)-amin und vor allem Methyl-bis-(3-amino-propyl)-amin.

Ferner kommen auch cycloaliphatische und araliphatische Polyamine, wie

1,4-Diamino-cyclohexan, 1-Aminomethyl-5-amino-1,3,3-trimethyl-cyclohexan, 1,3-Bis-aminomethylbenzol und Benzyl-bis-(3-amino-propyl)-amin

in Betracht.

Besonders geeignet sind solche Reaktionsprodukte, denen als wasserlösliche Polyamine

Diäthylentriamin, Bis-(3-aminopropyl)-amin, Methyl-bis-(3-aminopropyl)-amin oder Hexamethylen-diamin

zugrunde liegen.

Bevorzugt setzt man solche selbstvernetzenden, wasserlöslichen Reaktionsprodukte ein, denen wasserlösliche, basische Polyamidoamine vom Typ a) zugrunde liegen und die aus Mischungen dieser Polyamidoamine mit mindestens eine primäre und mindestens eine sekundäre Aminogruppe enthaltenden aliphatischen, cycloaliphatischen araliphatischen und/oder heterocyclischen Polyaminen hergestellt wurden. Polyamine und Dicarbonsäuren werden bevorzugt im Molverhältnis von (0,8 bis 1,4) : 1 eingesetzt.

Das Mengenverhältnis Polyamidoamine : Polyamine kann in weiten Grenzen schwanken. Pro 1 Mol Dicarbonsäure, die in Polyamidoamin enthalten ist, können 0,1 bis 2,0 Mol Polyamin eingesetzt werden. Bevorzugt wird der Bereich von 0,5 bis 1,0 Mol Polyamin pro Mol der im Polyamidoamin enthaltenen Dicarbonsäure.

Bei der Herstellung der erfindundgsgemäßen Reaktionsprodukte kann die Reihenfolge, in der die Komponenten Epichlorhydrin, Polyamidoamine und Polyamine zur Reaktion gebracht werden, beliebig gewählt werden; z. B. kann Epihalogenhydrin auf ein Gemisch aus Polyamidoamin und Polyamin in der Weise zur Einwirkung gebracht werden, daß man wäßrige, etwa 25 bis 50%ige Lösungen der aus den drei Komponenten bestehenden Mischungen bei einer Temperatur zwischen 25 und 95, vorzugsweise 40 und 70°C, so lange rührt, bis eine Probe der Reaktionsmischung in Form einer 10%igen wäßrigen Lösung bei 25°C eine Viskosität von mindestens 5, vorzugsweise 15 bis 30 mPa.s, aufweist. Dann setzt man der Reaktionsmischung zur Beendigung der Einwirkung und zur Stabilisierung der selbstvernetzenden Reaktionsprodukte zweckmäßig so viel Säure, z. B. Salzsäure, Schwefelsäure oder Essigsäure zu, daß der pH-Wert der wäßrigen Lösung zwischen 3 und 6, vorzugsweise zwischen 4 und 5, liegt und stellt den Feststoffgehalt der Reaktionslösung durch Verdünnen mit Wasser auf 10 bis 20 Gew.-% ein.

Es kann aber auch so verfahren werden, daß eine der beiden basischen Komponenten in einer ersten Reaktionsstufe mit Epichlorhydrin zunächst vorkondensiert wird und daß das Vorkondensat in einer zweiten Stufe unter Zusatz der anderen basischen Komponente weiter umgesetzt wird.

An Stelle einheitlicher Polyamidoamine und/oder Polyamine können Gemische dieser Komponenten eingesetzt werden.

Bevorzugt wird zunächst das Polyamin mit der gesamten Menge an Epihalogenhydrin, vorzugsweise Epichlorhydrin umgesetzt und danach die weitere Kondensation dieses Reaktionsgemisches mit dem Polyamidoamin durchgeführt.

Um die Naßfestigkeit von Papier gemäß dem Verfahren der vorliegenden Erfindung zu erhöhen, kann man in an sich bekannter Weise bevorzugt so vorgehen, daß man die in Betracht kommenden Reaktionsprodukte in Form wäßriger Lösungen bereits der wäßrigen Suspension des Papierrohstoffes

zusetzt und die Rohstoffsuspension dann zu Papier verarbeitet. Die Mengen an Reaktionsprodukt, die zur Erzielung der gewünschten Naßfestigkeit erforderlich sind, lassen sich durch Vorversuche ohne Schwierigkeiten ermitteln. Im allgemeinen empfiehlt es sich, auf 1000 Gewichtsteile Papierrohstoff oder Papier 1 bis 100 Gewichtsteile einer wäßrigen Lösung einzusetzen, deren Gehalt an Reaktionsprodukten 10 bis 20 Gew.-% beträgt.

Mit Hilfe der erfindungsgemäßen Reaktionsprodukte gelingt es, die Naßreißfestigkeit von Papier — auch von Papier aus ungebleichtem Zellstoff — hervorragend zu verbessern. In manchen Fällen ist es — je nach Wunsch bzw. nach Art des Papiers — auch möglich, die Saugfähigkeit zu erhöhen. Bemerkenswert ist, daß die Reaktionsprodukte den Weißgrad von Papier, das aus gebleichtem Zellstoff hergestellt ist, praktisch nicht beeinträchtigen. Erwähnt sei ferner, daß die Geschwindigkeit, mit der die erfindungsgemäß zu verwendenden Reaktionsprodukte auf dem Papier bzw. im Zellstoff vernetzen, hoch ist und daß die Reaktionsprodukte bei ihrem Einsatz in Zellstoffsuspensionen eine günstige Wirkung auf die Retention von Feinfasern, Füllstoffen und gegebenenfalls Pigmenten sowie auf die Entwässerungsgeschwindigkeit ausüben. Diese wertvollen Wirkungen und Eigenschaften besitzen die Reaktionsprodukte von Epichlorhydrin mit Polyamidoaminen und/oder Polyaminen, die bislang zur Verbesserung der Naßfestigkeit von Papier verwendet worden sind, nicht in gleichem Umfang.

In den folgenden Beispielen sind % jeweils Gewichtsprozent.

## Beispiele

### 1a) Herstellung des Polyamidoamins

432 g Diäthylentriamin (4,19 Mol) wurden in einen Dreihalskolben mit Rührer, Thermometer und Wasserabscheider gefüllt und innerhalb von 1 Stunde 584 g Adipinsäure (4 Mol) portionsweise zugegeben. Die Temperatur stieg dabei auf 120° C an. Dann wurde in 3 Stunden auf 150° C geheizt, 1 Stunde bei dieser Temperatur gehalten und weiter auf 170° C erwärmt, wobei das Reaktionswasser gleichmäßig herausdestillierte. Nach einer Haltezeit von $1^1/_2$ Stunden hatte das Kondensat eine Säurezahl von 20,6 und eine Aminozahl von 310 mg KOH/g. Nach Entfernen der Heizung wurde das Polyamidoamin mit 664 g Wasser verdünnt. Die Lösung hatte einen Festkörpergehalt von 60,1% (1 g, 1 Stunde 125° C).

### 1b) Herstellung des Reaktionsproduktes

364 g Wasser und 53 g Dipropylentriamin (0,4 Mol) wurden in einen Dreihalskolben mit Rührer, Thermometer und Tropftrichter gegeben, auf 37° C erwärmt und innerhalb von 1 Stunde 250 g Epichlorhydrin (2,7 Mol) in 10 Portionen zugegeben. Die exotherme Reaktion wurde durch Kühlen bei 35 bis 40° C gehalten. Dann ließ man 182 g der 60%igen Polyamidoaminlösung aus Beispiel 1a) (0,5 Mol Adipinsäure enthaltende Menge) in 15 Minuten zulaufen, wobei Erwärmung auf 46° C eintrat. Es wurde weiter auf 60° C erwärmt und bei dieser Temperatur gehalten. Nach ca. 1 Stunde hatte die Reaktionslösung eine Viskosität von D-E nach Gardner-Holdt. Nach Zugabe von 508 g Wasser wurde erneut auf 60° C erwärmt, bis nach ca. 3 Stunden eine Viskosität von B-C gemessen wurde. In die sofort abgekühlte Reaktionslösung wurden 600 g Wasser, 17,5 ml 48%ige Schwefelsäure und 2 g Kaliumsorbat gegeben. Es wurden 1948 g Harz mit einem pH von 4 und einem Festkörper von 20% (1 g, 1 Stunde 100° C) erhalten.

### 2a) Herstellung des Polyamidoamins

248 g Diäthylentriamin (2,4 Mol), 48 g Äthylendiamin (0,8 Mol) und 106 g Dipropylentriamin (0,8 Mol) wurden in einem Dreihalskolben mit Rührer, Thermometer und Wasserscheider gefüllt und innerhalb von ca. 1 Stunde 584 g Adipinsäure (4 Mol) portionsweise zugegeben, so daß die Temperatur nicht über 100° C stieg. Dann wurde in 3 Stunden auf 150° C geheizt, 1 Stunde bei dieser Temperatur gehalten und weiter auf 170° C erwärmt, wobei das Reaktionswasser gleichmäßig herausdestillierte. Nach einer Haltezeit von ca. 2 Stunden hatte das Kondensat eine Säurezahl von 17 und eine Aminzahl von 237 mg KOH/g. Nach Entfernen der Heizung wurde das Polyamidoamin mit 695 g Wasser verdünnt. Die Lösung hatte einen Festkörpergehalt von 60% (1 g, 1 Stunde, 125° C).

### 2b) Herstellung des Reaktionsproduktes

700 g Wasser und 104 g Dipropylentriamin (0,8 Mol) wurden in einen Dreihalskolben mit Rührer, Thermometer und Tropftrichter gegeben, auf 36° C erwärmt und innerhalb von 1 Stunde 446 g Epichlorhydrin (4,82 Mol) in 20 Portionen zugegeben. Die exotherme Reaktion wurde durch Kühlen bei 36 bis

45° C gehalten. Dann ließ man 350 g der 60%igen Polyamidoaminlösung aus Beispiel 2a) (die 1,0 Mol Adipinsäure enthaltende Menge) innerhalb von 5 Minuten zulaufen, erwärmte auf 55° C und hielt das Reaktionsgemisch bei dieser Temperatur. Nach 3 Stunden hatte die Reaktionslösung eine Viskosität von E-F nach Gardner-Holdt. Nach Zugabe von 928 g Wasser wurde die Temperatur weiter bei 60 bis 63° C gehalten, bis nach $4^1/_2$ Stunden eine Viskosität von B-C gemessen wurde. Der Ansatz wurde mit 1000 g Wasser verdünnt und auf 25° C abgekühlt. Dann wurden 32 ml 48%ige Schwefelsäure und 3,7 g Kaliumsorbat zugesetzt. Die Ausbeute betrug 3497 g mit einem Festkörper von 20,9 Gew.-% und einem pH-Wert von 4. Nach Verdünnen der Harzlösung mit 120 g Wasser wurde bei einem Festkörper von 19,6% (1 g, 1 Stunde 100° C) eine Viskosität nach Höppler von 21,8 mPa.s (25° C) gefunden.

3) Herstellung des Reaktionsproduktes

263 g Wasser und 59 g Dipropylentriamin (0,45 Mol) wurden in einen Dreihalskolben mit Rührer, Thermometer und Tropftrichter gegeben, auf 37° C erwärmt und innerhalb von 1 Stunde 227 g Epichlorhydrin (2,45 Mol) in 10 Portionen zugegeben. Die exotherme Reaktion wurde durch Kühlen bei 38 bis 45° C gehalten. Dann ließ man 87,5 g Polyamidoaminlösung (60%ig) aus Beispiel 2a) innerhalb von 5 Minuten zulaufen, erwärmte auf 65° C und man hielt das Reaktionsprodukt bei dieser Temperatur. Nach 2 Stunden hatte der Ansatz eine Viskosität von T-U nach Gardner-Holdt. Nach Zugabe von 717 g Wasser wurde die Temperatur weiter bei 65° C gehalten, nach $2^1/_2$ Stunden bei einer Viskosität von A nach Gardner-Holdt die Heizung abgestellt und das Gemisch 15 Stunden bei Raumtemperatur stehen gelassen. Die Viskosität betrug jetzt B. Es wurde mit 300 g Wasser, die 1,5 g Kalium-sorbat enthielten, verdünnt und mit 19 ml 48%iger Schwefelsäure auf einen pH von 4 eingestellt. Die Ausbeute betrug ca. 1600 g mit einem Festkörpergehalt von 19,8% (1 g, 1 Stunde 100° C).

4a) Herstellung des Polyamidoamins

184 g 3-(2-Aminoäthyl)-aminopropylamin (1,6 Mol), 48 g Äthylendiamin (0,8 Mol) und 165 g Diäthylentriamin (1,6 Mol) wurden in einen Dreihalskolben mit Rührer, Thermometer und Wasserabscheider gefüllt. Innerhalb von $1^1/_2$ Stunden wurden 584 g Adipinsäure (4,0 Mol) portionsweise zugegeben, wobei die Temperatur auf 90° C anstieg. Dann wurde in 3 Stunden auf 150° C geheizt, 1 Stunde bei dieser Temperatur gehalten und weiter auf 170° C erwärmt. Dabei destillierte das Reaktionswasser gleichmäßig heraus. Nach einer Haltezeit von ca. 2 Stunden hatte das Kondensat eine Säurezahl von 27 und eine Aminzahl von 207 mg KOH/g. Nach Entfernen der Heizung wurde das Polyamidoamin mit 700 g Wasser verdünnt. Die Lösung hatte einen Festkörper von 58,2% (1 g, 1 Stunde 125° C).

4b) Herstellung des Reaktionsproduktes

345 g Wasser und 52 g Dipropylentriamin (0,4 Mol) wurden in einen Dreihalskolben mit Rührer, Thermometer und Tropftrichter gegeben, auf 35° C erwärmt und innerhalb von 1 Stunde 223 g Epichlorhydrin (2,41 Mol) in 10 Portionen zugegeben. Die exotherme Reaktion wurde durch Kühlen bei 40 bis 50° C gehalten. Dann wurden 180 g Polyamidoaminlösung 58,2% aus Beispiel 4a) (die 0,5 Mol Adipinsäure enthaltende Menge) innerhalb von 5 Minuten zulaufen gelassen, auf 58° C erwärmt und bei dieser Temperatur gehalten. Nach ca. 3 Stunden hatte der Ansatz eine Viskosität von E nach Gardner-Holdt. Es wurden 464 g Wasser zugegeben und die Temperatur weiter bei 58 bis 60° C gehalten, bis nach ca. 5 Stunden eine Viskosität von B-C erreicht war. Der Ansatz wurde mit 500 g Wasser verdünnt, 1,85 g Kaliumsorbat zugegeben und auf 25° C abgekühlt. Nach Zugabe von 16,5 ml 48%iger Schwefelsäure hatte die Harzlösung einen pH von 4 und einen Festkörpergehalt von 19,9% (1 g 1 Stunde 100° C). Die Ausbeute betrug 1776 g.

5a) Herstellung des Polyamidoamins

330 g Diäthylentriamin (3,2 Mol) und 48 g Äthylendiamin (0,8 Mol) wurden in einen Dreihalskolben mit Rührer, Thermometer und Wasserabscheider gefüllt und innerhalb von 30 Minuten 533 g Dicarbonsäuregemisch (ca. 4 Mol bei einer Zusammensetzung von ca. 30,5% Bernsteinsäure, 42,1% Glutarsäure, 25,4% Adipinsäure und 2% Imide) portionsweise zugegeben, so daß die Temperatur nicht über 100° C stieg. Dann wurde in 3 Stunden auf 145° C geheizt, 1 Stunde bei dieser Temperatur gehalten und weiter auf 170° C erwärmt, wobei das Reaktionswasser gleichmäßig herausdestillierte. Nach einer Haltezeit von 2 Stunden hatte das Kondensat eine Säurezahl von 27 und eine Aminzahl von 240 mg KOH/g. Nach Entfernen der Heizung wurde das Polyamidoamin mit 580 g Wasser verdünnt. Die Lösung hatte einen Festkörpergehalt von 60,8% (1 g, 1 Stunde 125° C).

5b) Herstellung des Reaktionsproduktes

320 g Wasser und 52 g Dipropylentriamin (0,4 Mol) wurden in einen Dreihalskolben mit Rührer, Thermometer und Tropftrichter gegeben, auf 35° C erwärmt und innerhalb 1 Stunde 223 g Epichlorhydrin (2,41 Mol) in 10 Portionen zugegeben. Die exotherme Reaktion wurde durch Kühlen bei 40 bis 50° C gehalten. Dann wurden 160 g Polyamidoaminlösung 60%ig (die 0,5 Mol Adipinsäure enthaltende Menge) aus Beispiel 5a) innerhalb von 10 Minuten zulaufen gelassen, auf 58° C erwärmt und bei dieser Temperatur gehalten. Nach $1^1/_2$ Stunden hatte der Ansatz eine Viskosität von E-F nach Gardner-Holdt. Es wurden 479 g Wasser zugesetzt und die Temperatur weiter bei 55° C gehalten, bis nach 3 Stunden eine Viskosität von B-C erreicht war. Der Ansatz wurde mit 550 g Wasser verdünnt, 1,9 g Kaliumsorbat zugegeben und auf 25° C abgekühlt. Nach Zugabe von 20 ml 48%iger Schwefelsäure hatte die Harzlösung einen pH von 4 und einen Festkörpergehalt von 19,1% (1 g, 1 Stunde 100° C). Die Ausbeute betrug 1802 g.

6) Herstellung des Reaktionsproduktes (Vergleich)

350 g Wasser und 26 g Dipropylentriamin (0,2 Mol) wurden in einen Dreihalskolben mit Rührer, Thermometer und Tropftrichter gegeben, auf 38° C erwärmt und innerhalb von 1 Stunde 87 g Epichlorhydrin (0,94 Mol) in 10 Portionen zugegeben. Die exotherme Reaktion wurde durch Kühlen bei 35 bis 45° C gehalten. Dann wurden 175 g Polyamidoaminlösung 60% aus Beispiel 2a) (die 0,5 Mol Adipinsäure enthaltende Menge) in 10 Minuten zulaufen gelassen, wobei Erwärmung auf 45° C eintrat. Es wurde weiter auf 60° C erwärmt und bei dieser Temperatur gehalten. Nach ca. 1 Stunde hatte die Reaktionslösung eine Viskosität von D nach Gardner-Holdt. Nach Zugabe von 154 g Wasser wurde erneut auf 60° C erwärmt, bis nach ca. 2 Stunden eine Viskosität von D-E gemessen wurde. In die sofort auf 25° C abgekühlte Reaktionslösung wurden 297 g Wassser, 21,5 ml 48%ige Schwefelsäure und 1,1 g Kaliumsorbat gegeben. Es wurden 1107 g Harz mit einem pH 4 und einem Festkörper von 21,5% (1 g, 1 Stunde 100° C) erhalten.

7) Papierbehandlung

Zu 2 kg einer Suspension von 10 g gebleichtem Sulfitzellstoff mit einem Mahlgrad von 42 bis 43° Schopper-Riegler wurden unter starkem Rühren die 20%ige wäßrige Lösung von Beispiel 6 in einer Menge von 1% Festharz auf Zellstoff gegeben. Nach einer Aufziehzeit von mindestens 2 Minuten wurden in einem Blattbildner nach Schopper zwei Papierblätter von ca. 320 $cm^2$ Fläche mit einem Flächengewicht von 100 $g/m^2$ gebildet, auf dem Trockenzylinder 5 Minuten bei 100° C erwärmt und 10 Minuten bei 120° C im Trockenschrank nachgehärtet. Nach einer Klimatisierungszeit von 24 Stunden bei 20° C und 65% relativer Luftfeuchtigkeit wurden von Probestreifen des Papiers die Zugfestigkeiten (Naßfestigkeiten) in kg nach der Prüfvorschrift des Zellstoffuntersuchungsamtes Darmstadt gemessen.

Die auf diese Weise erhaltenen Papiere weisen eine Naßfestigkeit auf, die erheblich höher liegt als die Naßfestigkeit eines Papiers, das aus dem gleichen gebleichten Sulfitzellstoff ohne Zusatz der wäßrigen Lösungen der Produkte unter gleichen Versuchsbedingungen hergestellt wurde.

Tauscht man nun die 20%ige wäßrige Lösung des Produktes nach Beispiel 6 gegen die 20%igen Lösungen der Produkte nach den Beispielen 1b), 2b), 3), 4b) und 5b) aus, so weist das erhaltene Papier ebenfalls eine erheblich höhere Naßfestigkeit auf als ein Papier, das aus dem gleichen Sulfitzellstoff ohne Zusatz der wäßrigen Lösungen der Produkte unter sonst gleichen Versuchsbedingungen hergestellt wurde. Die Erhöhungen, die durch die Produkte nach den vorstehenden Beispielen gegenüber dem Vergleichsversuch hinsichtlich der Naßfestigkeit des Papiers erzielt wurden, sowie das Verhältnis Mol Epichlorhydrin zur Summe der Äquivalente freier basischer Aminogruppen sind aus Tabelle 1 zu ersehen. Die Zugfestigkeiten in kg wurden in Relativ-%, bezogen auf das Vergleichsprodukt 6 = 100%, angegeben.

Tabelle 1

| Produkt nach Beispielen | Mol Epichlorhydrin : Summe freier basischer Aminogruppen | Naßfestigkeit in Relativ-% |
|---|---|---|
| ohne Behandlung (Vergleich) | | 14 |
| 1b) | 1,52 | 124 |
| 2b) | 1,51 | 116 |
| 3) | 1,58 | 111 |
| 4b) | 1,51 | 110 |
| 5b) | 1,51 | 110 |
| 6) (Vergleich) | 0,94 | 100 |

Aus Tabelle 1 ist der technische Fortschritt der Werte mit den erfindundgsgemäßen Produkten gegenüber denen der Vergleichsprobe zur Erhöhung der Naßfestigkeit von Papier zu ersehen. Die nach den erfindungsgemäßen Beispielen 1b), 2b), 3), 4b) und 5b) gefundenen Naßfestwerte liegen beträchtlich über dem des Vergleichsbeispiels 6. Bei der Vergleichsprobe beträgt das Verhältnis (Mole Epichlorhydrin) : Gesamtäquivalent basischer Aminwasserstoff = 0,94 : 1. Es liegt also außerhalb des beanspruchten Bereichs. Dieses Produkt entspricht weitgehend dem Produkt von Beispiel 1 der DOS 1 906 450. Dort handelt es sich um ein Einwirkungsprodukt von Epichlorhydrin auf ein basisches Polyamid aus Diäthylentriamin und Adipinsäure und auf Methyl-bis-(3-aminopropyl)-amin.

8) Nach dem Beispiel 1a) hergestellte Polyamidoamine wurden mit Reaktionsprodukten aus 0,2, 0,4, 0,6 und 0,8 Mol Dipropylentriamin mit jeweils 0,67, 0,85, 1,03, 1,08 und 1,15 Mol Epichlorhydrin pro basischem Aminwasserstoff, d. h. bezogen auf die Summe der primären und sekundären Amingruppen-Äquivalente, in der Mischung aus Polyamidoamin und Dipropylentriamin zu Naßfestharzen umgesetzt. Diese Werte entsprechen z. B. für 0,2 Mol Dipropylentriamin einem Anteil von 0,85, 1,08, 1,3, 1,37 und 1,46 Mol Epichlorhydrin, bezogen auf die Summe der Äquivalente an freien basischen Amingruppen, die also auch die tertiären Amingruppen einschließt (siehe Tabelle 2). Dabei wurde prinzipiell so verfahren, wie es in Beispiel 2b) und Vergleichsbeispiel 6 angegeben ist.

9) Es wurde gearbeitet wie im Beispiel 8, jedoch nunmehr mit Polyamidoaminen gemäß Beispiel 2a).

## Prüfung der Lagerstabilität

Die erhaltenen Produkte von Beispiel 8 und 9 wurden einer Lagerstabilität bei 50° C bzw. bei einzelnen Proben auch bei Raumtemperatur unterzogen. Die Ergebnisse dieser Untersuchungen sind in Tabelle 2 und 3 zusammengestellt.

Der Anteil an Molen Epichlorhydrin pro freie basische Aminogruppe in Abhängigkeit von den unterschiedlichen Anteilen Dipropylentriamin im Polyamidoamin ist für diese Harze in Tabelle 2 zusammengestellt. Darin sind die rechts der Trennlinie liegenden Werte erfindungsgemäße Produkte. Die links der Trennlinie liegenden Werte sind Produkte gemäß dem Stand der Technik entsprechend der DOS 1 906 450.

In Tabelle 3 ist die Lagerstabilität gemäß Tabelle 2 zusammengestellt. Wie aus dieser Tabelle ersichtlich, liegt die Lagerstabilität der erfindungsgemäßen Harze erheblich höher, d. h. mindestens doppelt so hoch wie die der Vergleichsharze. Der erfindungsgemäß erzielte technische Fortschritt ist daher offensichtlich.

Tabelle 2

Naßfestharze nach Beispielen 8 und 9

| Mol Dipropylentriamin pro Adipinsäure im Polyamidoamin gemäß | Mol Epichlorhydrin pro Summe der Äquivalente freier basischer Aminogruppen | | | | |
|---|---|---|---|---|---|
| Beispiel 8 | Vergleich | | Erfindung | | |
| 0,8 | 0,98 | 1,25 | 1,51 | 1,59 | 1,69 |
| 0,6 | — | — | 1,47 | 1,54 | 1,64 |
| 0,4 | 0,92 | 1,16 | 1,41 | 1,48 | 1,57 |
| 0,2 | 0,85 | 1,08 | 1,3 | — | 1,46 |
| Beispiel 9 | Vergleich | | Erfindung | | |
| 0,8 | 1,01 | 1,28 | 1,55 | 1,62 | 1,73 |
| 0,6 | 0,98 | 1,24 | 1,51 | 1,58 | 1,68 |
| 0,4 | 0,94 | 1,19 | 1,44 | 1,51 | 1,61 |
| 0,2 | 0,86 | 1,09 | 1,32 | 1,39 | 1,48 |

Tabelle 3

Lagerstabilität bei 50°C bzw. Raumtemperatur der in Tabelle 2 zusammengestellten Naßfestharze nach Beispielen 8 und 9

| Mol Dipropylentriamin pro Mol Adipinsäure | Lagerstabilität bis zur Gelbildung Tage | | | | |
|---|---|---|---|---|---|
| Beispiel 8 | Vergleich | | Erfindung | | |
| 0,8 | 6 | 12 | >54 | >54 | >54 |
| 0,6 | — | — | 10 | >30 | >54 |
| 0,4 | 5 | 8 | 11 | 12 | >70 |
| 0,2 | 20*) | 27*) | 22*) | — | 35*) |
| Beispiel 9 | Vergleich | | Erfindung | | |
| 0,8 | instabil | 12 | >90 | >90 | >54 |
| 0,6 | — | — | >30 | >30 | >54 |
| 0,4 | 42*) | 2 | 12 | >70 | >70 |
| 0,2 | 36*) | 36*) | 45*) | — | 45*) |

*) Lagerung bei Raumtemperatur.

**Patentansprüche**

1. Selbstvernetzende wasserlösliche Reaktionsprodukte aus Epihalogenhydrin, wasserlöslichen basischen Polyamidoaminen und wasserlöslichen Polyaminen, die mindestens 2 an verschiedene Stickstoffatome gebundene Wasserstoff-Atome enthalten, dadurch gekennzeichnet, daß das Verhältnis der Molmenge Epihalogenhydrin zur Summe der Äquivalente an freien basischen Amingruppen mehr als 1,5 : 1, aber weniger als 2 : 1 beträgt.

2. Reaktionsprodukte nach Anspruch 1, dadurch gekennzeichnet, daß ihnen wasserlösliche Polyamine nach mindestens einer der Formeln

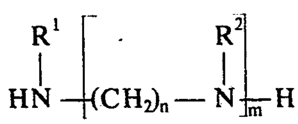

(I)

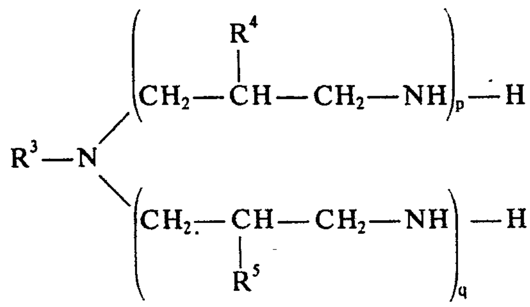

(II)

zugrunde liegen, wobei in obigen Formeln

| | |
|---|---|
| $R^1$ und $R^2$ | unabhängig voneinander Wasserstoff oder einen gegebenenfalls durch eine Amino- oder Hydroxygruppe substituierten $C_1-C_{10}$-, vorzugsweise $C_{1-4}$-Alkylrest, |
| m | eine ganze Zahl von 1 bis 8, vorzugsweise 2 bis 4, |
| n | eine ganze Zahl von 2 bis 10, vorzugsweise 3 bis 6, |
| $R^3$ | einen gegebenenfalls durch eine Amino- oder Hydroxygruppe substituierten $C_1-C_{18}$-Alkylrest, |
| $R^4$ und $R^5$ | unabhängig voneinander Wasserstoff oder eine Methylgruppe |
| p und q | jeweils 0 oder eine ganze Zahl von 1 bis 20, vorzugsweise 1 bis 4 und die Summe von (p und q) eine ganze Zahl von 1 bis 20, vorzugsweise 2 bis 5 |

bedeuten.

3. Reaktionsprodukt nach Anspruch 1 oder 2, dadurch gekennzeichnet, daß ihnen als wasserlösliche Polyamine Diäthylentriamin, Bis-(3-aminopropyl)-amin, Methyl-bis-(3-aminopropyl)-amin oder Hexamethylendiamin zugrunde liegen.

4. Reaktionsprodukte nach einem oder mehreren der Ansprüche 1 bis 3, dadurch gekennzeichnet, daß ihnen als Polyamidoamine

a) Umsetzungsprodukte von gesättigten aliphatischen $C_{4..10}$-Dicarbonsäuren mit
a1) aliphatischen Polyaminen, die mindestens 2 primäre und mindestens eine sekundäre und/oder tertiäre Aminogruppe enthalten, oder
a2) einem Gemisch der Polyamine a1) mit Polyaminen, die mindestens eine primäre und mindestens eine sekundäre Aminogruppe enthalten, zugrunde liegen.

5. Reaktionsprodukte nach einem oder mehreren der Ansprüche 1 bis 4, dadurch gekennzeichnet, daß ihnen Polyamidoamine zugrunde liegen, die aus mindestens einer der Säuren Bernsteinsäure, Glutarsäure und Adipinsäure aufgebaut sind.

6. Reaktionsprodukte nach einem oder mehreren der Ansprüche 1 bis 5, dadurch gekennzeichnet, daß ihnen Polyamidoamine zugrunde liegen, die aus Polyalkylenpolyaminen der Formel (I) aufgebaut sind, deren Alkylenrest bis zu 8 C-Atome enthält und deren Index m maximal 5 ist.

7. Reaktionsprodukte nach einem oder mehreren der Ansprüche 1 bis 6, dadurch gekennzeichnet, daß ihnen Polyamidoamine zugrunde liegen, die aus Diäthylentriamin, Triäthylentetramin oder Tetraäthylenpentamin als Komponente a1) hergestellt worden sind.

8. Reaktionsprodukte nach einem oder mehreren der Ansprüche 1 bis 7, dadurch gekennzeichnet, daß ihnen Polyamidoamine zugrunde liegen, die aus Polyaminen und Dicarbonsäuren im Molverhältnis (0,8 bis 1,4) : 1 hergestellt worden sind.

9. Verfahren zur Herstellung von Bindemitteln auf der Basis von Epihalogenhydrin, wasserlöslichen basischen Polyamidoaminen und wasserlöslichen basischen Polyaminen, die mindestens zwei an verschiedene Stickstoffatome gebundene Wasserstoffatome enthalten, für die Papierbehandlung, dadurch gekennzeichnet, daß die Polyamidoamine und Polyamine mit einem solchen Anteil an Epihalogenhydrin umgesetzt werden, daß das Verhältnis der Molmenge Epihalogenhydrin zur Summe der Äquivalente an freien basischen Amingruppen mehr als 1,5 : 1, aber weniger als 2 : 1 beträgt.

10. Verwendung der Reaktionsprodukte nach einem oder mehreren der Ansprüche 1 bis 8, bzw. der nach dem Verfahren gemäß Anspruch 9 hergestellten Produkte zur Erhöhung der Naßfestigkeit von Papier.

**Claims**

1. Self-crosslinking water-soluble reaction products derived from epihalogenohydrin, water-soluble basic polyamidoamines and water-soluble polyamines, containing at least two hydrogen atoms bound to different nitrogen atoms, characterized in that the ratio of the molar amount of epihalogenohydrin to the sum of the equivalents of free basic amino groups is more than 1.5 : 1, but less than 2 : 1.

2. Reaction products according to claim 1, characterized in that they are based on water-soluble polyamines according to at least one of the formulae

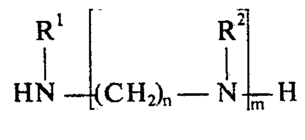

(I)

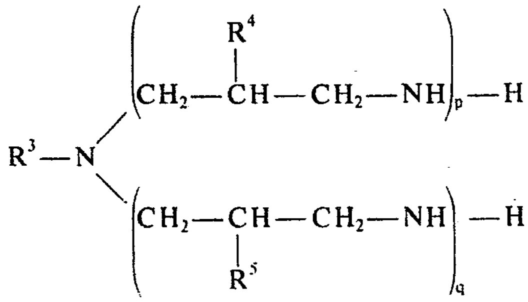

(II)

wherein in the above formula

| | |
|---|---|
| $R^1$ and $R^2$ | are independently from each other hydrogen or a $C_1$ to $C_{10}$-, preferably $C_1-C_4$-alkyl group, optionally substituted by an amino or hydroxy group, |
| m | is an integer of from 1 to 8, preferably of from 2 to 4, |
| n | is an integer of from 2 to 10, preferably of from 3 to 6, |
| $R^3$ | is a $C_1-C_{18}$-alkyl group, optionally substituted by an amino or hydroxy group, |
| $R^4$ and $R^5$ | are independently from each other hydrogen or a methyl group |
| p and q | each are zero or an integer of from 1 to 20, preferably of from 1 to 4 and the sum of (p and q) is an integer of from 1 to 20, preferably of from 2 to 5, |

respectively.

3. Reaction product according to claim 1 or 2, characterized in that they are based on diethylenetriamine, bis-(3-amino-propyl)amine, methyl-bis-(3-aminopropyl)-amine or hexamethylene diamine as water-soluble polyamines.

4. Reaction product according to one or more of the claims 1 to 3, characterized in that the basic polyamidoamines are

a) reaction products of saturated aliphatic $C_4-C_{10}$-dicarboxylic acids with

$a_1$) aliphatic polyamines which contain at least two primary and at least one secondary and/or tertiary amino group or

$a_2$) a mixture of polyamines $a_1$) with polyamines which contain at least one primary and at least one secondary amino group.

5. Reaction products according to one or more of the claims 1 to 4, characterized in that they are based on polyamidoamines which are built up of at least one of the acids succinic acid, glutaric acid and adipic acid.

6. Reaction products according to one or more of the claims 1 to 5, characterized in that they are based on polyamidoamines which are derived from polyalkylene polyamines of the formula (I), the alkylene group of which contains up to 8 carbon atoms and the index n of which is at most 5.

7. Reaction products according to one or more of the claims 1 to 6, characterized in that they are based on polyamidoamines which have been prepared from diethylene triamine, triethylene tetramine or tetraethylene pentamine as component $a_1$).

8. Reaction products according to one or more of the claims 1 to 7, characterized in that they are based on polyamidoamines which have been prepared from polyamines and dicarboxylic acids in a molar ratio of from (0.8 to 1.4) to 1.

9. Process for producing binding agents based on epihalogenohydrin, water-soluble basic polyamidoamines and water-soluble basic polyamines which contain at least two hydrogen atoms bound to different nitrogen atoms, for the treatment of paper, characterized in that the polyamidoamines and

polyamines are reacted with such an amount of epihalogenohydrin, that the ratio of the molar amount of epihalogenohydrin to the sum of the equivalents of free basic groups is more than 1.5 : 1, but less than 2 : 1.

10. Use of the reaction products according to one or more of claims 1 to 8, or those products prepared according to the process according to claim 9, respectively, for the increase of the wet strength of paper.

**Revendications**

1. Produits de réaction autoréticulants solubles dans l'eau, dérivant d'une épihalogénhydrine, de polyamido-amines basiques solubles dans l'eau et de polyamines solubles dans l'eau, qui contiennent au moins 2 atomes d'hydrogène liés à des atomes d'azote différents, produits caractérisés en ce que le rapport de la quantité molaire d'épihalogénhydrine à la somme des équivalents de groupes amino basiques libres est supérieur à 1,5 : 1 mais inférieur à 2 : 1.

2. Produits de réaction selon la revendication 1, caractérisés en ce qu'ils sont à base de polyamines solubles dans l'eau selon au moins une des formules

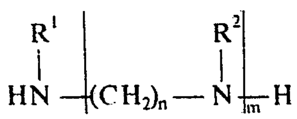

(I)

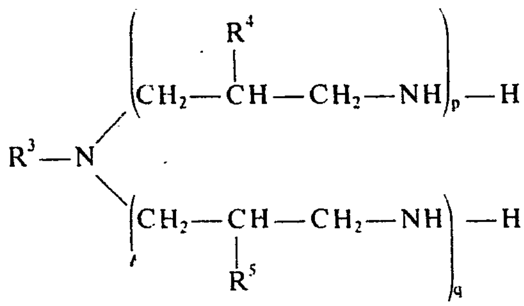

(II)

dans lesquelles

| | |
|---|---|
| $R^1$ et $R^2$ | désignent chacun, indépendamment l'un de l'autre, l'hydrogène ou un radical alkyle en $C_1-C_{10}$, de préférence en $C_1-C_4$, substitué le cas échéant par un groupe amino ou hydroxy, |
| m | représente un nombre entier de 1 à 8, de préférence de 2 à 4, |
| n | représente un nombre entier de 2 à 10, de préférence de 3 à 6, |
| $R^3$ | représente un radical alkyle en $C_1-C_{18}$, substitué le cas échéant par un groupe amino ou hydroxy, |
| $R^4$ et $R^5$ | représentent chacun, indépendamment l'un de l'autre, l'hydrogène ou un groupe méthyle, |
| p et q | désignent chacun O ou un nombre entier de 1 à 20, de préférence de 1 à 4, et la somme (p + q) est un nombre entier de 1 à 20, de préférence de 2 à 5. |

3. Produits de réaction selon l'une des revendications 1 et 2, caractérisés en ce qu'ils sont à base, comme polyamines solubles dans l'eau, de diéthylène-triamine, de bis-(amino-3 propyl)-amine, de méthyl-bis-(amino-3 propyl)-amine ou d'hexaméthylène-diamine.

4. Produits de réaction selon l'une quelconque des revendications 1 à 3, caractérisés en ce qu'ils sont à base, comme polyamido-amines,

a) de produits de réaction d'acides dicarboxyliques aliphatiques saturés en $C_{4-10}$,
a1) de polyamines aliphatiques qui contiennent au moins deux groupes amino primaires et au moins un groupe amino secondaire et/ou tertiaire, ou
a2) un mélange des polyamines a1) avec des polyamines qui contiennent au moins un groupe amino primaire et au moins un groupe amino secondaire.

5. Produits de réaction suivant l'une quelconque des revendications 1 à 4, caractérisés en ce qu'ils sont à base de polyamido-amines qui sont obtenues à partir d'au moins un des acides succinique, glutarique et adipique.

6. Produits de réaction suivant l'une quelconque des revendications 1 à 5, caracterisés en ce qu'ils sont à base, comme polyamido-amines, de polyalkylène-polyamines répondant à la formule (I) dont le radical alkylène contient jusqu'à 8 atomes de C et dont l'indice m est de 5 au maximum.

7. Produits de réaction suivant l'une quelconque des revendications 1 à 6, caractérisés en ce qu'ils sont à base de polyamido-amines qui ont été préparées à partir de diéthylène-triamine, de triéthylène-tétramine ou de tétraéthylène-pentamine comme constituant a1).

8. Produits de réaction suivant l'une quelconque des revendications 1 à 7, caractérisés en ce qu'ils sont à base de polyamido-amines qui ont été préparées à partir de polyamido-amines et d'acides dicarboxyliques dans le rapport molaire (0,8 à 1,4) : 1.

9. Procédé de préparation de liants à base d'une épihalogénhydrine, de polyamido-amines basiques solubles dans l'eau et de polyamines basiques solubles dans l'eau, qui contiennent au moins deux atomes d'hydrogène liés à des atomes d'azote différents, pour le traitement du papier, procédé caractérisé en ce qu'on fait réagir les polyamidoamines et les polyamines avec une proportion d'épihalogénhydrine telle que le rapport de la quantité molaire d'épihalogénhydrine à la somme des équivalents de groupes amino basiques libres est supérieur à 1,5 : 1 mais inférieur à 2 : 1.

10. Utilisation des produits de réaction selon l'une quelconque des revendications 1 à 8, ou des produits préparés par le procédé selon la revendication 9, pour augmenter la résistance à l'état humide du papier.